# EUROPÄISCHE PATENTANMELDUNG

(11) **EP 3 975 383 A1**
(43) Veröffentlichungstag der Anmeldung: **30.03.2022**
(21) Anmeldenummer: 20198928.2
(22) Anmeldetag: 29.09.2020
(51) Int. Cl.: H02K 1/06, H02K 15/02, B32B 15/01, H01F 41/02

(54) **ELEKTRISCHE MASCHINE, VERFAHREN UND ANLAGE**

(71) Anmelder: Siemens Aktiengesellschaft, 80333 München (DE)
(72) Erfinder: Schuh, Carsten, 85598 Baldham (DE); Soller, Thomas, 94469 Deggendorf (DE); Vollmer, Rolf, 36129 Gersfeld (DE)

(57) **Zusammenfassung**

Die elektrische Maschine umfasst einen Rotor und/oder Stator, welcher einen Stapel weichmagnetischer Bleche aufweist, welche je eine erste und eine zweite, von der ersten abgewandte, Flachseite aufweisen und welche sich von der ersten zur zweiten Flachseite verjüngen, wobei die weichmagnetischen Bleche des weichmagnetischen Stapels mit ihrer zweiten Flachseite in dieselbe Richtung orientiert sind.

Bei dem Verfahren zur Herstellung einer solchen elektrischen Maschine werden die Bleche gefertigt, indem eine Metallpaste mittels Sieb- und/oder Schablonendrucks gedruckt und auf einer Sinterunterlage gesintert wird.

Die Anlage weist eine solche und/oder derart gefertigte elektrische Maschine auf.

## Beschreibung

Die Erfindung betrifft eine elektrische Maschine mit einem Rotor und/oder Stator, aufweisend einen Stapel weichmagnetischer Bleche, ein Verfahren zur Herstellung einer solchen elektrischen Maschine sowie eine Anlage mit einer elektrischen Maschine.

Es ist bekannt, elektrische Maschinen mit Rotoren und/oder Statoren auszubilden, welche jeweils mit Stapeln weichmagnetischer Bleche gebildet sind.

Solche Stapel weichmagnetischer Bleche müssen aufwändig montiert und elektrisch isoliert werden, damit keine Wirbelströme oder Spannungsüberschläge beim Betrieb der Elektromotoren auftreten.

Es ist daher Aufgabe der Erfindung, eine verbesserte elektrische Maschine mit einem Rotor/Stator mit einem Stapel weichmagnetischer Bleche zu schaffen, welche insbesondere schneller und kostengünstiger fertigbar ist und welche insbesondere auch mit neuartigen Fertigungsverfahren zur Herstellung der weichmagnetischen Bleche verbessert fertigbar ist.

Weiterhin ist es Aufgabe der Erfindung, eine verbesserte Anlage mit einer solchen elektrischen Maschine zu schaffen.

Diese Aufgabe der Erfindung wird mit einer elektrischen Maschine mit einem Rotor und/oder Stator, der einen Stapel weichmagnetischer Bleche aufweist, mit den in Anspruch 1 angegebenen Merkmalen und mit einem Verfahren zur Herstellung einer elektrischen Maschine mit den in Anspruch 5 angegebenen Merkmalen sowie mit einer Anlage mit einer elektrischen Maschine mit den in Anspruch 10 angegebenen Merkmalen gelöst. Bevorzugte Weiterbildungen der Erfindung sind in den zugehörigen Unteransprüchen, der nachfolgenden Beschreibung und der Bezeichnung angegeben.

Die erfindungsgemäße elektrische Maschine weist einen Rotor und/oder einen Stator auf, welcher jeweils einen Stapel weichmagnetischer Bleche aufweist. Bei der erfindungsgemäßen elektrischen Maschine weisen die weichmagnetischen Bleche je eine erste und eine zweite, von der ersten abgewandte, Flachseite auf, wobei sich die Bleche von der ersten zur zweiten Flachseite verjüngen. Bei der erfindungsgemäßen elektrischen Maschine sind die weichmagnetischen Bleche des Stapels mit ihrer zweiten Flachseite in dieselbe Richtung orientiert angeordnet.

Bei der elektrischen Maschine ist die Isolierung des Stapels weichmagnetischer Bleche vorteilhaft sehr leicht bewerkstelligbar. Denn infolge der sich verjüngenden Bleche des Stapels weichmagnetischer Bleche weist der Stapel in Stapelrichtung einen sägezahn- oder widerhakenförmigen Verlauf auf.

In einer Richtung entgegen derjenigen Richtung, in welcher sich die Bleche jeweils verjüngen, kann an dem Rand des Stapels entlang gleitend eine Isolationsschicht wie insbesondere ein Isolationspapier eingebracht werden.

Insbesondere bildet der Stapel einen Bestandteil eines Stators, welcher in eine Stapelfassung eingebracht und welche mittels einer Isolationsschicht von dem Stapel elektrisch isoliert ist.

Bei der erfindungsgemäßen elektrischen Maschine lässt sich diese Isolationsschicht folglich besonders leicht zwischen dem Stapel weichmagnetischer Bleche und der Stapelfassung einbringen, da die Bleche des Stapels aufgrund ihrer sich verjüngenden Form eine Vorzugsrichtung auszeichnen, in welcher die Isolationsschicht zwischen Stapel und Stapelfassung leichter einbringbar ist als in der entgegengesetzten Richtung.

Infolge der geometrischen Form der weichmagnetischen Bleche des Stapels der erfindungsgemäßen elektrischen Maschine ist die Isolationsschicht leicht in ihrer Position arretierbar, da die Isolationsschicht entgegen dieser Vorzugsrichtung nur unter Überwindung eines großen Reibungswiederstandes zwischen Stapel und Stapelfassung entfernbar ist. Bei der erfindungsgemäßen elektrischen Maschine ist folglich eine elektrische Isolation leicht einbringbar.

Zweckmäßigerweise handelt es ich bei der Isolationsschicht der erfindungsgemäßen elektrischen Maschine um ein Isolationspapier.

Besonders bevorzugt umfasst die erfindungsgemäße elektrische Maschine eine Stapelfassung, welche zur Fassung des Stapels ausgebildet ist. Zweckmäßig umfasst die erfindungsgemäße elektrische Maschine zudem die Isolationsschicht.

Bevorzugt sind bei der erfindungsgemäßen elektrischen Maschine sämtliche Bleche des Stapels, vorzugsweise des Rotors und/oder des Stators, in dieselbe Richtung orientiert. Auf diese Weise lässt sich der gesamte Stapel weichmagnetischer Bleche elektrisch von einer Stapelfassung isolieren, sodass ein abschnittsweises Vorgehen entlang der Stapelrichtung des Stapels nicht erforderlich ist. Entsprechend ist die erfindungsgemäße elektrische Maschine besonders unaufwändig und kostengünstig fertigbar.

Besonders bevorzugt sind bei der erfindungsgemäßen elektrischen Maschine die weichmagnetischen Bleche Sieb- und/oder Schablonendruckteile und zweckmäßig zudem Sinterteile. Auf diese Weise lassen sich die weichmagnetischen Bleche besonders einfach in ihrer geometrischen Form ausbilden. Insbesondere als Sinterteile können die weichmagnetischen Bleche infolge einer Sinterschwindung leicht in ihre sich von der ersten zur zweiten Flachseite verjüngende Form gebracht werden.

Vorzugsweise verlaufen bei der erfindungsgemäßen elektrischen Maschine die Bleche zwischen der ersten und der zweiten Flachseite, vorzugsweise vollumfänglich, schräg zu einer Normalen auf die erste und/oder zweite Flachseite. Bevorzugt weisen die weichmagnetischen Bleche also eine äußerlich, d.h. im Sinne eines einhüllenden geometrischen Körpers, eine kegelstumpfförmige Gestalt auf. Im Inneren können die weichmagnetischen Bleche eine zentrale Durchführung, etwa eine kreiszylindrische Durchführung, welche von erster zu zweiter Flachseite reicht aufweisen.

Bei dem erfindungsgemäßen Verfahren zur Herstellung einer elektrischen Maschine werden die Bleche gefertigt, indem eine Metallpaste mittels Sieb- und/oder Schablonendrucks gedruckt und auf einer Sinterunterlage gesintert wird. Vorteilhaft kann die Sinterunterlage eine Sinterschwindung der Metallpaste geeignet beeinflussen und eine sich von erster zur zweiten Flachseite verjüngende Gestalt der weichmagnetischen Bleche bewirken.

In einer vorteilhaften Weiterbildung des Verfahrens gemäß der Erfindung wird die Metallpaste mittels des Sieb- und/oder Schablonendrucks mit einer ersten, an einer Druckunterlage anliegenden Flachseite sowie einer zweiten, von der ersten Flachseite abgewandten, Flachseite derart abgeschieden, dass sich die Metallpaste von der ersten zur zweiten Flachseite verjüngt. Die geometrische Form der weichmagnetischen Bleche kann insbesondere mittels 3D-Drucks festgelegt werden.

Geeigneterweise bildet bei dem erfindungsgemäßen Verfahren die Druckunterlage die Sinterunterlage. In dieser Weiterbildung des erfindungsgemäßen Verfahrens ist folglich kein Lösen der Metallpaste von der Druckunterlage vor dem Sintern erforderlich. Somit kann eine hohe Haftreibung zwischen Metallpaste und Sinterunterlage und demzufolge auch eine große Beeinflussung der Sinterschwindung ermöglicht werden.

Bei dem Verfahren gemäß der Erfindung wird vorzugsweise die Metallpaste jeweils derart gesintert, dass der Sinterschwindungsverlauf auf eine Verjüngung der zweiten Flachseite hin optimiert wird.

Bei dem erfindungsgemäßen Verfahren wird bevorzugt eine Sinterunterlage mit einer derartig hohen Haftreibung und/oder eine Metallpaste mit einer derart herabgesetzten Fließfähigkeit herangezogen, dass die Sinterschwindung an der ersten Flachseite verschwindet oder minimiert wird.

Die erfindungsgemäße Anlage weist eine erfindungsgemäße elektrische Maschine wie oben beschrieben und/oder eine elektrische Maschine hergestellt mit einem erfindungsgemäßen Verfahren wie oben beschrieben auf.

Nachfolgend wird die Erfindung anhand eines in der Zeichnung dargestellten Ausführungsbeispiels näher erläutert.

Es zeigen:
- Fig. 1: einen Stapel weichmagnetischer Bleche eines Stators einer erfindungsgemäßen elektrischen Maschine schematisch im Querschnitt sowie

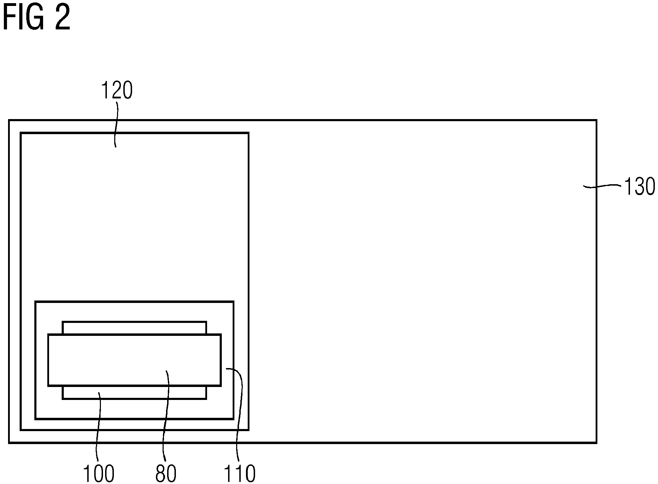

- Fig. 2: eine erfindungsgemäße Industrieanlage mit einem Antrieb mit der erfindungsgemäßen elektrischen Maschine mit dem Stator mit dem Stapel weichmagnetischer Bleche gemäß Fig. 1 schematisch in einer Prinzipskizze.

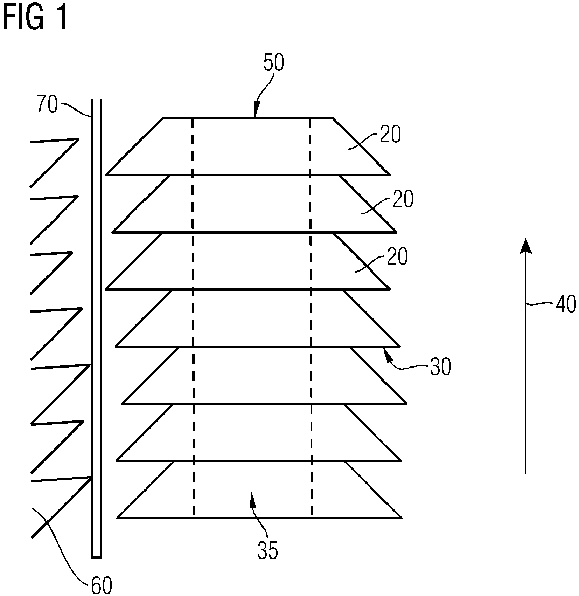

Der in Fig. 1 dargestellte Stapel 10 ist mit weichmagnetischen Blechen 20 gebildet und bildet einen Stator einer erfindungsgemäßen elektrischen Maschine in Gestalt eines Elektromotors.

Die weichmagnetischen Bleche 20 des Stapels 10 sind mittels Sieb- und Schablonendrucks und nachfolgenden Sinterns einer Metallpaste weichmagnetischen Metalls, beispielsweise Reineisens, gefertigt und weisen jeweils äußerlich die Gestalt eines Kegelstumpfs mit einer kreisförmigen Grundfläche 30 auf. Zusätzlich sind die äußerlich kegelstumpfförmigen weichmagnetischen Bleche 20 mit einer zentralen Durchführung 35 versehen, in der ein Rotor der erfindungsgemäßen elektrischen Maschine vorgesehen ist. Die weichmagnetischen und äußerlich kegelstumpfförmigen Bleche 20 verjüngen sich jeweils in einer Stapelrichtung 40 von der Grundfläche 30 zu einer einen im Vergleich zur Grundfläche 30 kleineren äußeren Durchmesser aufweisenden und zur Grundfläche 30 parallelen Stirnfläche 50.

Die kegelstumpfförmige Gestalt der weichmagnetischen Bleche 20 ist mittels der Fertigung der weichmagnetischen Bleche 20 mittels Sieb- und Schablonendrucks und Sinterns realisiert: die weichmagnetischen Bleche 20 werden jeweils mittels einer Schablone mit einem kreisringförmigen Loch auf ein Substrat als kreiszylindrisches Grünteil mit einer inneren kreiszylindrischen Durchführung 35 gedruckt. Das Substrat ist jeweils mit derart hoher Oberflächenrauigkeit gebildet, dass das Grünteil an seiner Auflagefläche auf dem Substrat, welche die spätere Grundfläche 30 des späteren weichmagnetischen Blechs 20 bildet, einer auftretenden Sinterschwindung bei einem anschließenden Sintern des Grünteils nicht folgen kann. Das Grünteil wird nachfolgend gesintert. Folglich schwindet das Grünteil fern der Auflagefläche in einem stärkeren Ausmaß als an der Auflagefläche, an welcher die Sinterschwindung sogar vollständig aufgrund der Oberflächenrauigkeit verschwindet. Infolge der lokal entlang des Grünteils verschiedenen Sinterschwindung verringert sich eine Stirnfläche des Grünteils, welche die spätere Stirnfläche 50 des weichmagnetischen Blechs 20 bildet, gegenüber der Auflagefläche in ihrem äußeren Durchmesser, sodass das Grünteil beim Sintern eine äußere kegelstumpfförmige Gestalt gewinnt (im inneren gewinnt die ursprünglich zylindrische Durchführung 35 ebenfalls eine kegelstumpfförmige Gestalt, dies ist in der Zeichnung nicht explizit detailliert). Nach dem Sintern wird das gesinterte weichmagnetische Blech 20 vom Substrat gelöst und mit weiteren gleichartig gefertigten weichmagnetischen Blechen 20 mittels eines elektrisch isolierenden Klebers (in den Figuren nicht gezeigt) zum Stapel 10 verbunden. Dabei werden die weichmagnetischen Bleche 20 derart miteinander verbunden, dass die Grundflächen 30 der weichmagnetischen Bleche 20 jeweils in dieselbe Richtung (hier entgegengesetzt zur Stapelrichtung 40) weisen. Die Stirnflächen 50 der weichmagnetischen Bleche 20 des Stapels 10 weisen entsprechend in Stapelrichtung 40.

Der Stapel 10 weichmagnetischer Bleche 20 ist in einer Stapelfassung 60 gehalten. Die Stapelfassung 60 ist von dem Stapel 10 mittels einer Isolierung in Gestalt eines Isolierpapiers 70 elektrisch isoliert. Das Isolierpapier 70 kann entgegengesetzt zur Stapelrichtung 40, d.h. in diejenige Richtung, in welche die Grundflächen 30 der weichmagnetischen Bleche 20 des Stapels 10 weisen, leicht zwischen Stapel 10 und Stapelfassung 60 eingeschoben werden.

Alternativ oder zusätzlich kann in weiteren, nicht eigens dargestellten Ausführungsbeispielen die äußerliche kegelstumpfförmige Gestalt bereits beim Druck der Grünteile der weichmagnetischen Bleche 20 vorgesehen werden, sodass eine Sinterung wie oben beschrieben die Ausbildung der kegelstumpfförmigen Gestalt lediglich verstärkt, aber nicht allein bedingt. Alternativ kann die äußere kegelstumpfförmige Gestalt auch ausschließlich durch einen 3D-Druck des Grünteils vorgegeben werden, sodass eine Oberflächenrauigkeit des Substrats wie oben beschrieben verzichtbar ist.

Der Stapel 10 bildet mit dem Isolierpapier 70 und der Stapelfassung 60 einen Stator 80 einer erfindungsgemäßen elektrischen Maschine 100 aus. Dazu bilden die Durchführungen 35 der Bleche 20 in dem Stapel 10 eine zentrale, in Stapelrichtung 40 führende, zentrale Durchführung 35 aus. Im dargestellten Ausführungsbeispiel ist die Durchführung 35 jeweils beim Druck der weichmagnetischen Bleche 20 vorgesehen, indem die Bleche 20 als Kreisringe gedruckt werden. Alternativ kann die Durchführung 35 auch nachträglich subtraktiv vorgesehen werden, beispielsweise mittels Fräsens.

Zur Bildung einer erfindungsgemäßen elektrischen Maschine 100 wird in die Durchführung 35 des Stators 80 ein Rotor 110 eingebracht, der grundsätzlich gleichartig wie der Stator 80 gefertigt werden kann, mit Ausnahme der Durchführung 35 sowie der Stapelfassung 60 und des Isolierpapieres 70, welche für einen Rotor 100 verzichtbar sind. Der Stator 80 ist zur Bildung einer elektrischen Maschine 100 in an sich bekannter Weise (in der Zeichnung nicht explizit gezeigt) mit Spulen und einer elektrischen Speisung der Spulen versehen.

Die elektrische Maschine 100 ist im gezeigten Ausführungsbeispiel ein Elektromotor und Teil eines Antriebs 120 einer Industrieanlage 130, hier einer Fließbandanlage. In weiteren, nicht eigens dargestellten Ausführungsbeispielen ist die erfindungsgemäße elektrische Maschine ein Elektromotor und Teil eines Antriebs eines autonomen Lagerfahrzeugs oder ein elektrischer Generator einer Energiewandler-Einrichtung einer Energiegewinnungsanlage, beispielsweise eines Stromgenerators eines Windrads.

## Patentansprüche

1. Elektrische Maschine mit einem Rotor und/oder Stator (80), aufweisend einen Stapel (10) weichmagnetischer Bleche (20), welche je eine erste (30) und eine zweite, von der ersten (30) abgewandte, Flachseite (50) aufweisen und welche sich von der ersten (30) zur zweiten Flachseite (50) verjüngen, wobei die weichmagnetischen Bleche (20) des Stapels (10) mit ihrer zweiten Flachseite (50) in dieselbe Richtung (40) orientiert sind.

2. Elektrische Maschine nach Anspruch 1, bei welcher sämtliche Bleche (20) des Stapels (10), vorzugsweise des Rotors und/oder Stators (80), mit ihrer zweiten Flachseite (50) in dieselbe Richtung (40) orientiert sind.

3. Elektrische Maschine nach einem der vorhergehenden Ansprüche, bei welcher die Bleche (20) Sieb- und/oder Schablonendruckteile und vorzugsweise Sinterteile sind.

4. Elektrische Maschine nach einem der vorhergehenden Ansprüche, bei welcher die Bleche (20) eine zwischen der ersten (30) und der zweiten Flachseite (50), vorzugsweise vollumfänglich, schräg zu einer Normalen auf die erste (30) und/oder zweite Flachseite (50) verlaufende Oberfläche aufweisen.

5. Verfahren zur Herstellung einer elektrischen Maschine nach einem der vorhergehenden Ansprüche, bei welchem die Bleche (20) gefertigt werden, indem eine Metallpaste mittels Sieb- und/oder Schablonendrucks gedruckt und auf einer Sinterunterlage gesintert wird.

6. Verfahren nach dem vorhergehenden Anspruch, bei welchem die Metallpaste mittels des Sieb- und/oder Schablonendrucks mit einer ersten, an einer Druckunterlage anliegenden Flachseite sowie einer zweiten, von der ersten Flachseite abgewandten, Flachseite derart abgeschieden wird, dass sich die Metallpaste von der ersten zur zweiten Flachseite verjüngt.

7. Verfahren nach einem der vorhergehenden Ansprüche, bei welchem die Druckunterlage die Sinterunterlage bildet.

8. Verfahren nach einem der vorhergehenden Ansprüche, bei welchem die Metallpaste jeweils derart gesintert wird, dass der Sinterschwindungsverlauf auf eine Verjüngung der zweiten Flachseite (50) hin optimiert wird.

9. Verfahren nach einem der vorhergehenden Ansprüche, bei welchem eine Sinterunterlage mit einer derartig hohen Haftreibung und/oder eine Metallpaste mit einer derart herabgesetzten Fließfähigkeit herangezogen wird, dass die Sinterschwindung an der ersten Flachseite (30) verschwindet oder minimiert wird.

10. Anlage mit einer elektrischen Maschine (100) nach einem der Ansprüche 1 bis 4 oder hergestellt mit einem Verfahren nach einem der Ansprüche 5 bis 9.
